# EUROPEAN PATENT APPLICATION

(11) **EP 1 190 993 A2**
(43) Date of publication of application: **27.03.2002**
(21) Application number: 00500226.6
(22) Date of filing: 02.11.2000
(51) Int. Cl.: C03C 1/02, C03C 8/16, C03B 19/06

(54) **Base material for the preparation of vitreous vitrocrytalline type pieces, process for preparing the base material and method for manufacturing pieces**

(30) Priority: 21.09.2000 ES 200002283
(71) Applicant: Esmalglass, S.A., 12540 Villarreal (Castellon) (ES)
(72) Inventor: Del Rio Soto, José Luis, 12002 Castellon (ES)
(74) Representative: Ungria Lopez, Javier

(57) **Abstract**

Base material for the manufacturing of baked vitreous or vitrocrystalline pieces, characterized in that it is a granulated material with granules with a particle size with a diameter smaller than 2,000 µm that comprises, at least,
60% and 99.89% by weight of a first component selected among a frit composition, an enamel composition, glass, or mixtures thereof,
0.1% and 5% by weight of an organic binding agent that has a decomposition temperature lower than the end of sintering temperature of the base material; and in that said material is formed of granules with a humidity content lower than 3% by weight.

## Description

### TECHNICAL FIELD OF THE INVENTION

The present invention fits in the field of materials useful in building, especially in the ceramic material sector and, particularly, the vitreous or vitrocrystalline type materials, the base granules that are used to prepare such materials, and the processes for manufacturing such granules and materials.

### BACKGROUND OF THE INVENTION

Vitreous coating elements obtained by pressing called "vitreous mosaic", that are obtained by pressing of dry melting raw materials are known nowadays. Said raw materials are recycled glass or frits that have been dry ground, with which, when manufacturing pieces larger than some 10 x 10 cm by means of a pressing process and subsequent melting problems arise, due to the fact that the pressing of dry ground materials does not tend to permit a good load in the pressing mold. A lack of orthogonality of the pieces is produced. On the other hand, since the processed materials do not have plasticity, pieces which when they are removed from the pressing mold for their subsequent baking have a very low mechanical strength that causes the pieces to break at the edges and corners, when the format is larger than 3 x 3 cm, 4 x 4 cm., etc., are obtained.

Other processes described in the prior art used natural stone to obtain a laminated final product, such as the case of patent application WO-A-9100402, that describes a process for preparing a laminated tile product, that comprises the use of natural stone in the form of a sheet with a plurality of ceramic substrates that adhere to the natural stone by means of an adhesive layer. The resulting laminated product has one surface of natural stone and the other one of a ceramic substrate and it can be cut in the form of tiles.

On the other hand, European patent application EP-A-0305193 describes a process for producing cellular glass tiles coated with films. Said process consists of molding a material essentially consisting of a vitrifiable mineral and a foaming agent within a block such as a tile, coating the block with a layer of material that vitrifies the mineral, heating the coated block at the melting temperature of the coating layer and then heating to a softening temperature of the vitrifying mineral.

In turn, U.S. patent US-4818731 has the purpose of providing colored frits that broaden the variety of different colors and decorative motifs that can be obtained on artificial stones. This document describes a colored frit prepared by melting a composition of material that comprises: a devitrifying substance, a dye that is a compound with metal ions and a borosilicate glass. According to U.S. patent US-4818731, in the manufacturing of the colored frits, a key step of the process described therein is the rapid cooling to which the mixture is subjected after melting for the purpose of preventing crystallization from taking place. Said supercooling is carried out by means of introducing the molten mixture in water directly or else by immediately pouring it into a steel vessel. Finally the colored frit obtained by supercooling is ground to a particle diameter of 0.5 to 5.0 mm. These colored frits constitute the essential component from which the decorated artificial stone is obtained. Said patent also describes a process for manufacturing artificial stone using the cited colored frits, in which said colored frits alone, or mixed with at least one type of mica that contain fluoromicas are sintered, in such a way that the colored frits are devitrified and said colors of the devitrified frits are perceptible. The mechanism by which the color is transferred consists of that when the vitreous component is mixed with the dye and is melted, the metal oxide that constitutes the dye is dissolved in the molten glass and gives color to the frit. This process allows the manufacturing of artificial stone that has a wide variety of colors and types. A fluorine salt such as alkali metal or alkaline earth metal fluoride is used as a devitrifying substance. Optionally, other non-fluorinated substances such as zirconium, titanium, kaolin oxides and lithium compounds can be added thereto.

Therefore, the prior art does not contain a suitable material from which large format vitreous or vitrocrystalline type pieces can be obtained and which also permits a large variety of colors and decorative motifs on said pieces, such as for example, an appearance similar to that of veined marble in the entire mass and not only on the surface.

### OBJECTS OF THE INVENTION

The purpose of the present invention is a base material for manufacturing vitreous or vitrocrystalline pieces that have enough dimensional stability to form unbaked bodies in any format, shape or size, that also has improved abrasion resistance, chemical resistance and stain resistance properties, and that have an unlimited variety of colors and decorative motifs, such as marble.

Another additional object of the present invention is said vitreous or vitrocrystalline material pieces of varied formats.

Another object of the invention is a process for manufacturing such vitreous or vitrocrystalline type pieces derived from said material.

Finally, another object of the invention is the use of said vitreous or vitrocrystalline base material and the pieces that are derived therefrom for use in industry, especially in building and particularly as elements for coating floors, facades or walls, aside from using same as a decorative material.

### DESCRIPTION OF THE INVENTION

The present invention refers to a base material formable for the manufacturing of baked vitreous or vitrocrystalline pieces, characterized in that it is a granulated material with granules of a particle size with a diameter smaller than 2,000 µm, preferably smaller than 1000 µm that comprises, at least,
60% and 99.89% by weight of a first component selected from among a frit composition, an enamel composition, glass, or mixtures thereof,
0.1 and 5% by weight of an organic binding agent that has a decomposition temperature lower than the end of sintering temperature of the base material;
and in that said material is in the form of granules with a humidity contents lower than 3% by weight.

The function of the organic binding material is to achieve that the unbaked formed piece has a plasticity and mechanical resistance that permits the forming and handling of large format pieces, and furthermore, that the piece does not break when coming out of the forming device. According to the invention, it is essential that the binding agent has a decomposition temperature lower than the end of sintering temperature of the base material, so that said binding material has decomposed before the vitreous or vitrocrystalline type piece obtained from the material object of the invention has converted into an impermeable product during baking. Said end of sintering temperature is determined by heating microscopy. If the decomposition temperature of the binding agent were higher than the end of sintering temperature of the base material, since not all of the binding material has decomposed and part of it remains in the final baked material, said piece would swell and be deformed.

The purpose of the binding material is a mechanical function that thus consists of binding the entire mass, in particular during the mechanical forming step of the pieces, and to permit obtainment of a piece of any format or size. Said organic binding agent is selected from the group formed by the following families:
- synthetic aqueous plastic dispersions: for example, vinyl acetate copolymers or homopolymers, vinyl copolymers, vinylethylene copolymers, acrylic dispersions, or acrylic derivatives and styrene derivatives, acrylic-ethylene-vinyl acetate terpolymers, acrylic-ethylenevinyl chloride terpolymers, vinyl-ethylene acetate copolymers, etc.,
- synthetic resins,
- natural resins: for example, rosin esters, hydrogenated resin esters, etc.;
- polysaccharides and modified polysaccharides;
- polyvinyl alcohol;
- waxes, polyethylene glycols, polypropylene glycols, etc.
- silicones and silicone derivatives;
- cellulose derivatives: for example, cellulose carboxymethyl;
- alkyl resins.

Likewise, combinations and mixtures of binding agents of the products of the cited families may also be used.

The binding agent may be added in the form of a dispersion, as a solution, or even in the solid state. In a preferred embodiment of the invention, a synthetic aqueous dispersion, such as for example, an aqueous dispersion of an acrylic acid ester copolymer is used as the binding agent.

The amount of binding agent is between 0.1% and 5% by weight, preferably between 1% and 3% by weight. In a more preferred embodiment even the amount of binding agent is 2% by weight.

An essential characteristic of the material object of the invention is that it should be in the form of granules with a humidity content lower than 3%, preferably 2.5% by weight.

The material object of the present invention can also comprise, at least, a suspending agent. Said suspending agent, conventional in itself, can be inorganic, such as kaolin, bentonite, clay, etc., or it can be organic, such as a cellulose derivative, xantane gum, acrylic derivatives, etc. The amount of suspending agent present can be 0.01% and 20% by weight. In a preferred embodiment of the invention said suspending agent is kaolin. In the event that an organic suspending agent is used, its decomposition temperature should be lower than the end of sintering temperature of the base material.

The material object of the invention may comprise at least a dye in itself conventional. The dyes that can be used are selected from among inorganic pigments that are mixtures of calcined oxides, dye oxides, for example, chrome oxide; soluble salts such as for example, organic salts of inorganic oxides; or additions of colored frits. The dye can be added in solid form, as a solution in the event that it is a soluble salt, or as a dispersion. In a preferred embodiment they dye is an inorganic pigment. Said dye is present in an amount between 0.01% and 15% by weight. The dye may be coating the granule of the base material, or else it may form part of the mass itself of the granule of base material.

An additional object of the present invention is a process for manufacturing the above-specified base material, whose process comprises:
- a first step in which a first mixture is prepared by mixing, at least, a first component selected from among a frit composition, an enamel composition, glass, or mixtures of any of them with, at least, an organic binding agent selected from the above-cited binding agents, and wet grinding same until a particle size with a diameter smaller than 1,000 µm is achieved, and
- a second step in which a granulated material is prepared with granules with a diameter smaller than 2,000 µm, preferably smaller than 1,000 µm, that comprises 60% to 99.89% by weight of the first component and 0.1 to 5% by weight of the organic binding material, subjecting the first mixture to granulation and drying to a humidity content lower than 3% by weight. Preferably, in the first step the binding agent is added in the form of an aqueous dispersion.

Any device known in the art to obtain the ground material that is used as a first component in the first step of the process may be used and preferably a ball grinder using a water content between 20% and 45% by weight with respect to the amount of solid material is used. In a preferred embodiment the water content is 35% with respect to the amount of solid material. A homogenous mixture with a suitable granulometry is obtained in this step. The result of the grinding is a ground material with a residue on sieve of 45 µm of 0.1% to 40% by weight. Preferably, the residue on sieve of 45 µm is from 15% to 20% by weight.

In an alternative embodiment of the process of the present invention, at least, a dye and/or, at least, a suspending agent can be added in the first step of the process.

Another additional object of the present invention is a method for manufacturing a vitreous or vitrocrystalline type piece of varied formats, said method comprising:
- preparing a formed material feeding a base material obtained by any of the claims 1 to 14 into a mechanical forming device;
- subjecting the formed material to baking.

The mechanical forming can be carried out in any way known in the art such as pressing, extruding, etc. It is done by pressing in a preferred embodiment, applying a pressure between 350 kg/cm² and 600 kg/cm².

Additionally, according to an embodiment of the invention, the base material is subjected to preforming in at least a form that has at least a physical characteristic different from the above-defined ones, such as for example, a size larger than 2,000 µm.

In order to obtain different colorings, shades of color, and/or geometric or fanciful decorations on a surface layer, but preferably on the entire volume of the baked pieces, at least two fractions selected from the following may be combined:
- a first fraction of the above-described base material,
- a second fraction of an above-described base material, and/or,
- a third fraction of an above-described base material,
wherein the first fraction, the second fraction and the third fraction differ in at least a first characteristic selected from among granule size, degree of humidity, presence of a dye, proportion of dye, presence of a suspending agent, proportion of suspending agent, proportion of binding agent, and physical characteristics.

Hence, the first fraction may be for example of a neutral color and the second fraction may be colored, or the first fraction may comprise a first dye of a specific color and the second fraction comprises a dye of a specific second color, in such a way that the mixture of the fractions in the forming device, after pressing and baking, leads to a piece with a uniform shade and/or coloring, when the mixture of both fractions has been homogeneous and when the first fraction and the second fraction differ only in the type or proportion of dye, and to areas or motifs with visibly different shades and/or colors the less homogenous the mixture of both fractions is, or when the fractions have different compositions (for example proportions of binding agent, different binding agents of different binding capacities, different degrees of humidity, different granulometries, etc.) we obtain a coloring that is not uniform.

One or both of the above-defined fractions may be combined with a third fraction that in turn has properties different from those of the first fraction and second fraction, such as for example, a granule size larger than the granule size of the first fraction and the second fraction, a binding agent of a greater or lesser binding capacity, a larger proportion of binding agent, a different dye, a different proportion of dye, the presence or non-presence, type and/or proportion of the suspending agent, or the third fraction may even be preformed, in itself or in combinations with others of above-defined differentiating properties, in preformed bodies in shapes and structures such as geometric shapes, regular or amorphous lines, masses, amorphous pieces that, after the forming remain visible on the baked piece.

For baking, the unbaked pieces resulting after forming can be placed in a conventional manner, on a refractory or on a refractory mesh in the event of using a continuous mesh furnace. In the event of using a refractory, the refractory may be previously coated with a mixture of a conventional abherent, for example, kaolin.

Optionally, also in a conventional manner, a finish may be given to the baked material by grinding, polishing or beveling the pieces. The grinding and polishing step will depend on the final appearance that the piece should have.

The furnace in the baking step is selected among a continuous or discontinuous furnace, or a muffled or non-muffled furnace. Said baking is carried out for a time between 15 and 120 minutes, although this time will depend to a large degree on the type of furnace used, and it is carried out at a maximum temperature which is the melting temperature of the formed material, which normally tends to be between 700°C and 1,300°C.

By means of the process of the present invention one can obtain all types of formats and measurements of vitreous or vitrocrystalline type pieces. For example, large boards that may be used directly or that may be cut into suitable sizes for their use, may be obtained. The pieces obtained from the vitreous or vitrocrystalline material object of the invention may have the appearance of translucent or opaque glass, or they may have the appearance of marble or natural stone, and, in the event that the base material contains a third fraction of the above-described type, they may have visible motifs that, for example, may simulate the veins of natural stone such as for example marble.

Another additional object of the present invention is the use of the vitreous or vitrocrystalline material object hereof, or of any material derived from said material according to any of the embodiments of the described process, for use thereof in the obtainment of materials for building, and, in particular, as elements for coating floors, facades or walls or as a decorative material.

The field of industrial uses of the materials that may be obtained by means of the present process is very broad, due to the variety of sizes that may be obtained as well as due to the unlimited variety of decorative motifs and colors.

Furthermore, the possibility offered by the material object of the present invention to achieve decorative effects during the mechanical forming step permits said decorative motifs to be transferred to the entire mass, in such a way that an essential advantage with respect to the prior art is achieved. This advantage consists of maintaining the appearance of the product if the surface wears or the piece is sectioned. This permits the imitation, for example, of the appearance of the natural stones not only on the surfaces of the pieces but also on the sides thereof, which is especially interesting when the sides of the pieces are visible where they are positioned, such as for example in corners, or when the piece is used as a cover or "board".

An essential advantage of the process of the present invention over the prior art is the fact that the mechanical forming step can be carried out dry and this is a result of the adding of the binding agent capable of binding the entire mass in the presence of very little humidity.

Another additional advantage is that the variations of decorative motifs and colors are much greater than those found, for example, in natural stones.

Other advantages of the materials and of the pieces derived therefrom according to the present invention with respect to materials such as marble are that they have a greater abrasion resistance, aside from a greater resistance to chemicals such as acids and bases, and even a greater stain resistance.

### EMBODIMENTS OF THE INVENTION

The present invention is illustrated on the basis of the following examples.

### EXAMPLE 1

A mixture of a transparent frit A that comprises

| | |
|---|---|
| Na₂O | 4% |
| K₂O | 3% |
| CaO | 6% |
| MgO | 2% |
| ZnO | 2% |
| BaO | 2% |
| B₂O₃ | 10% |
| Al | 7% |
| SiO₂ | 61% |
| ZrO₂ | 3% |

and kaolin as the suspending agent in a proportion of 94.12% to 3.92%, is prepared. Said mixture is ground in a ball grinder using a water content of 35% with respect to the amount of solid material. This is ground until a residue on the sieve of 45 µm of 15% to 20% is obtained.

After grinding, an aqueous dispersion of a acrylic acid ester copolymer in a percentage of 1.96% by weight, is added to the mixture.

The resulting mixture is dried and granulated obtaining granules with a humidity content between 0 and 2% with respect to the dry base and with a granulometry between 0 and 1 mm.

### EXAMPLE 2

A fraction of the dry granulated material obtained according to example 1 is coated with an inorganic pigment which is SiO₂ ZnO₂ V₂O₃, that provides a blue shade. The pigment is in an amount between 0.01% to 1% by weight with respect to the total mixture.

### EXAMPLE 3

The neutral granulated material obtained according to example 1 and the colored material of example 2 are fed into a conventional mechanical forming device, specifically a press, and pieces with a format of 60 x 40 x 1.5 cm. are formed.

The unbaked pieces are placed on a refractory previously coated with a mixture of conventional abherent such as kaolin and they are subjected to a baking cycle at a maximum temperature that is between 1,000°C and 1,050°C for a total time of 55 minutes.

Finally, the finish step is carried out by means of polishing, grinding or beveling depending on the final appearance that the piece is to have.

### EXAMPLE 4

A mold is filled with neutral granulated material obtained according to example 1, and material obtained according to example 2 is deposited into said mold after passing it along a grating that doses it, in such a way that irregular strips that will form the veins are formed. Thus, a final piece with the appearance of veined marble is obtained.

### EXAMPLE 5

A mold is filled with neutral granulated material obtained according to example 1, and material obtained according to example 2 that has been preformed is deposited in said mold, in such a way that after pressing and subsequent baking, a piece is obtained with a decoration of geometric shapes.

### EXAMPLE 7

In a manner similar to example 6, but depositing the different materials at the same time in the mold, in such a way that after pressing and subsequent baking, a piece with a decoration of geometric shapes is obtained.

## Claims

1. Base material for manufacturing baked vitreous or vitrocrystalline pieces, **characterized in that** it is a granulated material with granules of a particle size with a diameter smaller than 2,000 µm that comprises, at least,
60% and 99.89% by weight of a first component selected among a frit composition, an enamel composition, glass or mixtures thereof,
0.1% and 5% by weight of an organic binding agent that has a decomposition temperature lower than the end of sintering temperature of the base material; and
**in that** said material is in the form of granules with a humidity content lower than 3% by weight.

2. Material according to claim 1, **characterized in that** the granules have a diameter smaller than 1,000 µm.

3. Material according to claim 1, **characterized in that** the binding agent is selected from a group formed by:
- synthetic plastic aqueous dispersions of vinyl, acrylic, and/or styrene polymers and derivatives thereof,
- synthetic resins,
- natural resins,
- polysaccharides and modified polysaccharides,
- polyvinyl alcohols,
- waxes,
- polyethylene glycols,
- polypropylene glycols,
- silicones or silicone derivatives, and
- alkyl resins,
- cellulose derivatives
and combinations thereof.

4. Material according to claim 3, **characterized in that** the binding agent is an acrylic acid ester copolymer.

5. Material according to claim 1, **characterized in that** it also comprises at least a suspending agent.

6. Material according to claim 5, **characterized in that** the suspending agent is in an amount between 0.01% and 20% by weight.

7. Material according to claim 5 or 6, **characterized in that** the suspending agent is selected from among an organic product and an inorganic product.

8. Material according to claim 7, **characterized in that** the suspending agent is kaolin.

9. Material according to claim 1, **characterized in that** it also comprises at least a dye.

10. Material according to claim 9, **characterized in that** the dye is in an amount between 0.01% and 15% by weight.

11. Material according to claim 10, **characterized in that** the dye is selected from among inorganic compounds, soluble salts and colored frits.

12. Material according to claim 10 or 11, **characterized in that** the dye is an inorganic pigment.

13. Material according to claim 10, 11 or 12, **characterized in that** the dye is spread through the entire mass of said granules.

14. Material according to claim 10, 11, 12 or 13, **characterized in that** the dye is present as a coating of at least part of the granules of the material.

15. Process for the preparation of a base material used for the manufacture of vitreous or vitrocrystalline pieces, **characterized in that** it comprises:
- a first step in which a first mixture is prepared by mixing, at least, a first component selected from among a frit composition, an enamel composition, glass, or mixtures of any of them with, at least, an organic binding agent selected from among the above-specified binding agents, and wet grinding same until a particle size with a diameter smaller than 1,000 µm is obtained, and
- a second step in which a granulated material with granules of a diameter smaller than 2,000 µm that comprises 60% to 99.89% by weight of the first component and 0.1 to 5% by weight of the organic binding agent is obtained, subjecting the first mixture to granulation and drying to a humidity content lower than 3% by weight.

16. Process according to claim 15, **characterized in that** the granules have a diameter smaller than 1,000 µm.

17. Process according to claim 15, **characterized in that** the binding agent is added in the form of an aqueous dispersion, in the form of a solution or as a solid.

18. Process according to claim 15, **characterized in that** a dye is also added in the first step.

19. Process according to claim 15, **characterized in that** a suspending agent is also added in the first step.

20. Method for manufacturing a vitreous or vitrocrystalline piece, **characterized in that** it comprises
- preparing a formed material feeding a base material obtained according to any of claims 1 to 14 into a mechanical forming device, and
- subjecting the formed material to baking.

21. Method according to claim 20, **characterized in that** the mechanical forming is carried out by pressing.

22. Method according to claim 21, **characterized in that** a pressure between 350 kg/cm² and 600 kg/cm² is applied in the pressing.

23. Method according to claim 20, **characterized in that** the mechanical forming is carried out by extrusion.

24. Method according to any of claims 20 to 23, **characterized in that** the base material is subjected to preforming into at least a shape that has at least a physical characteristic different from the characteristics defined in claim 1.

25. Method according to any of the claims 20 to 23, **characterized in that** the forming device is fed with at least two fractions selected from among
- a first fraction of a base material according to any of claims 1 to 14;
- a second fraction of a base material according to any of claims 1 to 14;
- a third fraction of a base material according to any of claims 1 to 14;
wherein the first fraction, the second fraction and the third fraction differ in at least a first characteristic selected among particle size, degree of humidity, presence of a dye, proportion of the dye, presence of a suspending agent, proportion of the suspending agent, proportion of a binding agent, and physical characteristics.

26. Method according to claim 25, **characterized in that** the third fraction has at least a particle size larger than the particle sizes of the first fraction and the second fraction.

27. Method according to claim 25, **characterized in that** the first fraction has been prepared according to claim 24.

28. Method according to claim 20, **characterized in that** the baking is carried out in a furnace selected from among a continuous or discontinuous furnace, or a muffled or non-muffled furnace.

29. Method according to claim 20, **characterized in that** the baking is carried out for a time between 15 and 120 minutes.

30. Method according to claim 20, 28 or 29, characterized in that the baking is carried out at a maximum temperature which is the melting temperature of the formed material.

31. Vitreous or vitrocrystalline piece obtained by a method according to any of claims 20 to 30.

32. Use of a material according to any of the claims 1 to 14 in the manufacture of vitreous or vitrocrystalline type pieces useful as building materials.
